# EUROPÄISCHE PATENTSCHRIFT

(11) **EP 1 486 375 B1**
(45) Veröffentlichungstag und Bekanntmachung des Hinweises auf die Patenterteilung: **14.11.2007**
(21) Anmeldenummer: 04010747.6
(22) Anmeldetag: 06.05.2004
(51) Int. Cl.: B60P 1/64, B62D 21/14

(54) **Längenveränderbares Containerchassis**
Length-adjustable container-chassis
Châssis de conteneurs, réglable en longueur

(30) Priorität: 13.06.2003 DE 10327075
(43) Veröffentlichungstag der Anmeldung: 15.12.2004
(73) Patentinhaber: Schmitz Gotha Fahrzeugwerke GmbH, 99867 Gotha (DE)
(72) Erfinder: Koch, Josef, 89081 Ulm (DE)
(74) Vertreter: Weber, Gerhard

(56) Entgegenhaltungen:
- EP-A- 0 394 548
- EP-A- 1 057 719
- DE-A1- 3 707 566
- US-A- 4 783 093

## Beschreibung

Zum Transport von Containern sind Sattelcontainerfahrgestelle gebräuchlich, welche an Querträgern in unterschiedlichen Längspositionen Verriegelungen zum Eingriff in Container-Eckbeschläge aufweisen. Als Container sind insbesondere ISO-Container mit einer standardisierten Höhe von 2776 mm und HighCube (HC)-Container mit einer Höhe von 2896 mm gebräuchlich.

Häufig werden die Container an Rampen entladen, wofür sie heckbündig auf dem Fahrgestell liegen müssen. Insbesondere bei Beladung eines Fahrgestells mit einem kurzen (20', in verringertem Maß auch 30') Container in heckbündiger Position ergibt sich eine ungünstige Lastverteilung mit zu geringer Lasteinwirkung auf die Sattelkupplung und die Antriebsräder des Zugfahrzeugs, was zu erheblichen Problemen im Fahrbetrieb führen kann.

Aus der EP 0 394 548 B1 ist ein Straßenschlepper für den Containertransport bekannt, bei welchem auf dem hinteren Abschnitt des Sattelcontainerfahrgestells zusätzlich ein Obergestell vorgesehen ist, welches zwischen einer heckbündigen Position zur Be- und Entladung und einer in Fahrtrichtung versetzten Position für den Fahrbetrieb verlagerbar ist, um im Fahrbetrieb eine bessere Lastverteilung zu erzielen. Das fest auf dem Fahrgestell aufliegende Obergestell weist hierfür an seiner Unterseite über den Rädern des Fahrgestells verlaufende Schienen mit in Längsrichtung durchgehenden Auflageflächen auf. Durch Absenken des Fahrgestells über die pneumatische Federung der Räder liegt das Obergestell mit den Auflageflächen auf den Rädern auf und ist zugleich von dem Fahrgestell abgehoben. Durch Verfahren des Fahrgestells wird das auf den Rädern ruhende Obergestell relativ zum Fahrgestell verschoben. Durch Anheben des Fahrgestells in Normalhöhe liegt das Obergestell wieder auf dem Fahrgestell auf und ist von den Rädern abgehoben.

Es sind ferner längenverstellbare Containerchassis als Schlittenchassis teleskopierbare Chassis bekannt, welche in einen Fahrgestellrahmen (Bogie) und einen gegenüber diesem in Längsrichtung verschiebbaren und in verschiedenen Betriebspositionen in Längsrichtung arretierbaren Ladeoberrahmen unterteilt sind. Solche längenverstellbare Chassis ermöglichen in einer ganz eingeschobenen Position von Fahrgestellrahmen und Ladeoberrahmen die heckbündige Anordnung eines Containers zur Be- und Entladung auf dem Ladeoberrahmen und durch dessen Verschiebung in Fahrtrichtung die Positionierung des Containers mit ausreichender Belastung der Sattelkuppeln. Bei einem derartig ausziehbaren Chassis der Firma Renders sind die Kotflügel über den Rädern der hintersten Achse pneumatisch auf die Reifen absenkbar, um bei einer Längenänderung des Chassis den die Räder dabei überstreichenden hinteren Querträger nicht zu behindern. Ein vergleichbares längenveränderliches Chassis ist aus der DE 89 10 645 U1 bekannt.

Bei einem aus der EP 0 825 097 bekannten verlängerbaren Flachbettanhänger kann in einem vorderen Abschnitt, welcher tiefer liegt als die hintere, mit dem Fahrgestellrahmen verbundene Ladeebene, eine vordere Ladeebene durch pneumatische Hubmittel angehoben werden, um eine stufenfrei durchgehende befahrbare Ladeebene herzustellen. Beim Zusammenschieben taucht der vordere Teil des Anhängers unter den hinteren ein. Ähnliche Anhänger sind aus der EP 0 809 577 B1 und der EP 0 998 403 B1 bekannt. Eine Verlagerung eines heckbündigen Containers in Längsrichtung nach vorne ist bei diesen Anhängern aber nicht möglich. Zudem zeigen auch diese Anhänger die genannten Probleme beim Containertransport unter Einhaltung von Höhenbeschränkungen.

Die EP 1 057 719 A2 beschreibt ein längenverstellbares Containerchassis mit einem Fahrgestellrahmen und einem relativ zu diesem in Längsrichtung zwischen wenigstens zwei Betriebspositionen verschiebbaren Ladeoberrahmen. Am hinteren Ende des Fahrgestellrahmens und am vorderen Ende des Ladeoberrahmens sind jeweils Twist-Lock-Verriegelungen vorgesehen, um einen Container auf dem Chassis zu verriegeln. Insgesamt sind mehrere Querträger mit Twist-Lock in unterschiedlichen Abständen an dem Chassis vorgesehen.

Der vorliegenden Erfindung liegt die Aufgabe zugrunde, ein längenverstellbares Containerchassis anzugeben, welches eine große Flexibilität hinsichtlich des sicheren Transports von Containern unter Einhaltung von Höhenbeschränkungen zeigt.

Die Erfindung ist im Patentanspruch 1 beschrieben. Die abhängigen Ansprüche enthalten vorteilhafte Ausgestaltungen und Weiterbildungen der Erfindung.

Die Erfindung ermöglicht durch die Höhenverstellbarkeit des Ladeoberrahmens in der zweiten Betriebsposition relativ zu dem auf einer Standfläche aufstehenden Rädersatz wenigstens einer Radachse zum einen eine Absenkung auf eine Fahrhöhe, bei welcher auch der Transport hoher HC-Container unter Einhaltung der Höhenbeschränkungen möglich ist, und zum anderen eine Anhebung des Laderahmens auf eine Verschiebehöhe, in welcher Teile von Ladeoberrahmen einerseits, insbesondere dessen hinterer Querträger, und Fahrgestell andererseits, insbesondere dessen hinterer Rädersatz mit Kotflügeln, bei der Längsverschiebung übereinander hinweg bewegt werden können. Als Fahrgestell sei hierbei die Baugruppe mit einem Fahrgestellrahmen und mit diesem verbundenen Rädern auf einer oder mehreren Radachsen verstanden. Als Bezugspunkt für Fahrhöhe und Verschiebehöhe sei die durch Querträger des Ladeoberrahmens bestimmte Ladeebene als Auflageebene für Container angenommen. Vorzugsweise stehen Ladeoberrahmen und Fahrgestellrahmen in gleichbleibender relativer Höhenlage und die Höhenverstellung des Ladeoberrahmens erfolgt gemeinsam mit dem Fahrgestellrahmen, wofür vorteilhafterweise eine typischerweise vorhandene pneumatische Federung des Fahrgestellrahmens eingesetzt werden kann. Ein Beispiel für eine Höhenverstellung eines Fahrgestells mittels der pneumatischen Federung ist beispielsweise der bereits genannten EP 0 394 548 B1 entnehmbar. In anderer Ausführung kann auch eine relative vertikale Verstellbarkeit zwischen Fahrgestellrahmen und Ladeoberrahmen vorgesehen sein und für die horizontale Verschiebung der Ladeoberrahmen gegen den Fahrgestellrahmen angehoben werden.

Der auf Verschiebehöhe befindliche Ladeoberrahmen kann durch maximales Ineinanderschieben von Ladeoberrahmen und Fahrgestellrahmen in Längsrichtung zu einer minimalen Gesamtlänge des Chassis mit dem hinteren Querträger zum Heck des Fahrzeugs bzw. Fahrgestells verschoben werden, so dass ein auf dem hinteren Querträger und wenigstens einem weiteren Querträger des Ladeoberrahmens gehaltener Container eine heckbündige Position als erste Betriebsposition zum Be- und Entladen an einer Rampe einnimmt. Der hintere Querträger liegt in dieser ersten Betriebsposition in Längsrichtung hinter der hinteren Achsposition des Fahrgestells. Nach Abschluss des Be- oder Entladevorgangs wird der auf Verschiebehöhe befindliche Ladeoberrahmen mit dem darauf befindlichen Container relativ zum Fahrgestellrahmen nach vorne in die zweite Betriebsposition verschoben, typischerweise mittels des Zugfahrzeugs bei blockierten Rädern des Fahrgestells.

In der zweiten Betriebsposition liegt der hintere Querträger des Ladeoberrahmens in Längsrichtung vor der hinteren Achsposition des Fahrgestells, bei einem bevorzugterweise mehrachsigen Fahrgestell vorteilhafterweise zwischen zwei Achspositionen, vorzugsweise von jeder Achsposition um wenigstens 50 %, insbesondere wenigstens 80 % eines Radhalbmessers des Rädersatzes in Längsrichtung beabstandet. Sofern weitere Betriebspositionen in Längsrichtungen als Fahrpositionen mit in Fahrhöhe befindlichem Ladeoberrahmen vorgesehen sind, gelten diese Merkmale analog. Bevorzugt sind genau zwei in Längsrichtung unterschiedliche Betriebspositionen vorgesehen.

In der zweiten Betriebsposition in Längsrichtung können Ladeoberrahmen und Fahrgestellrahmen in an sich bekannter Weise gegen Längsverschiebung lösbar arretiert werden. Nach Absenken des Ladeoberrahmens in der zweiten Betriebsposition auf die Fahrhöhe liegt die durch die Querträger bestimmte Ladeebene des Ladeoberrahmens so tief, insbesondere bei maximal 1150 mm, vorzugsweise maximal 1104 mm, dass auch HC-Container von dieser Höhe der Ladeebene aus die maximal zulässige Gesamthöhe, welche in den meisten europäischen Staaten auf 4000 mm (mit teilweiser Tolerierung bis 4060 mm) festgelegt ist, nicht überschreiten.

In der Fahrhöhenposition des Oberrahmens können insbesondere die Unterkanten der Querträger des Ladeoberrahmens tiefer liegen als die Oberkanten (oder Scheitel) der Räder oder der diese überdeckenden Kotflügel. Pneumatische Fahrgestell-Federungen weisen typischerweise einen vertikalen Verstellbereich auf, innerhalb dessen ein Fahrbetrieb zulässig ist. Vorteilhafterweise liegt die Fahrhöhe im Sinne der vorliegenden Erfindung im unteren, die Verschiebehöhe im oberen Drittel eines solchen Verstellbereichs. Die Fahrhöhe kann vorteilhafterweise dadurch charakterisiert sein, dass bei auf Fahrhöhe befindlicher Ladeebene des Ladeoberrahmens die Ladeebene parallel zu einer ebenen Standfläche des mit einem Zugfahrzeug verbundenen Chassis verläuft. Bei auf Verschiebehöhe befindlicher Ladeebene ist diese dann durch die unveränderte Höhe der Sattelauflage leicht nach vorne fallend geneigt. Als Höhe der Ladeebene sei bei geneigter Ausrichtung jeweils deren höchster Punkt angesehen. Das Chassis kann bei Beladung mit einem ISO-Container u. U. auch bei auf Verschiebehöhe befindlicher Ladeebene eine zulässige Fahrposition einnehmen, welche aber nicht als Fahrhöhe im Sinne der vorliegenden Erfindung angesehen sei.

Die Bedingung, dass der hintere Querträger (und gegebenenfalls weitere Querträger des Ladeoberrahmens) in der zweiten Betriebsposition vor der hinteren Achsposition bzw. bei mehrachsigem Fahrgestellrahmen zwischen in Längsrichtung benachbarten Achspositionen liegt, beschränkt zwar die Wahl der Betriebspositionen für Fahrbetriebe in Längsrichtung, ermöglicht aber auf besonders vorteilhafte Weise den sicheren Fahrbetrieb unter Einhaltung von Höhenbegrenzungen für alle gebräuchlichen Containertypen und -größen. Vorteilhafterweise können insbesondere auch die im Markt bevorzugten großen Reifengrößen mit Durchmessern von 960-1060 mm eingesetzt und die Räder mit Kotflügelanordnungen überdeckt sein.

Die Erfindung ist nachfolgend anhand bevorzugter Ausführungsbeispiele unter Bezugnahme auf die Abbildungen noch eingehend veranschaulicht. Dabei zeigt
Fig. 1 ein eingefahrenes Chassis mit heckbündigem Container,
Fig. 2 das Chassis in ausgezogener angehobener Position,
Fig. 3 das Chassis in abgesenkter Position,
Fig. 4 ein Gooseneck-Chassis in eingeschobener Position,
Fig. 5 das Chassis nach Fig. 4 in ausgezogener Position.

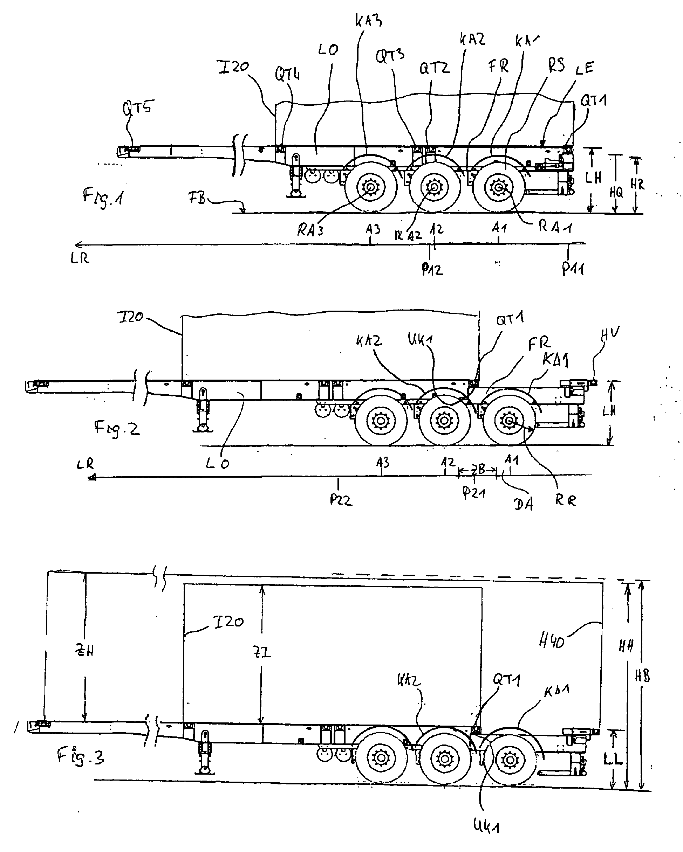

In Fig. 1 bis Fig. 3 ist schematisch ein Containerchassis in Form eines Sattelfahrgestells in Seitenansicht dargestellt. Das Chassis besteht im wesentlichen aus einem Fahrgestellrahmen FR mit drei Radachsen RA1, RA2, RA3 an drei in Längsrichtung LR beabstandeten Achspositionen A1, A2, A3 und einem Ladeoberrahmen LO, welcher in Längsrichtung relativ zu dem Fahrgestellrahmen verschiebbar an diesem geführt ist. In der Höhe sind Fahrgestellrahmen und Ladeoberrahmen fest gekoppelt.

Auf dem Ladeoberrahmen LO sind an sich senkrecht zur Zeichenebene erstreckenden Querträgern QT1 bis QT5 Verriegelungen, z. B. Twist-Lock-Verriegelungen zum Eingriff in Eckbeschläge von Containern angeordnet. Die die Container abstützenden oberen Flächen der Querträger oder der Verriegelungen bestimmen eine Ladeebene, z. B. für einen 20'-ISO-Container 120. Die Rädersätze RS sind an dem Fahrgestellrahmen mit pneumatischer Federung aufgehängt. Die pneumatische Federung erlaubt in begrenztem Umfang eine Verstellung der Höhe des Fahrgestellrahmens und damit auch der Ladeebene über einer Fahrbahnfläche FB.

In den Abbildungen sind Situationen mit unterschiedlichen Betriebspositionen des Ladeoberrahmens in Längsrichtung relativ zum Fahrgestellrahmen und mit unterschiedlichen Höhen der Ladeebene dargestellt.

In Fig. 1 sind Ladeoberrahmen LO und Fahrgestellrahmen FR in einer ersten Betriebsposition in Längsrichtung soweit ineinander geschoben, dass der hintere Querträger QT1 des Ladeoberrahmens, welcher typischerweise der hinterste Querträger des Chassis in Längsrichtung ist, im wesentlichen heckbündig am Chassis in einer Längsposition P11 angeordnet ist. Zusätzlich kann auch ein nach hinten teleskopisch ausfahrbarer Heckauszug mit weiteren Verriegelungen vorgesehen sein. Ein 20'-ISO-Container I20, welcher mit Eckbeschlägen an Verriegelungen der Querträger QT1, QT4 gehalten ist, befindet sich in heckbündiger Position und ist über eine Rampe, an welche das Chassis rückwärts gefahren wird, be- und entladbar. Das Chassis befindet sich in einem mittels der pneumatischen Federung angehobenen Zustand mit einer auf einer als Verschiebehöhe bezeichneten oberen Ladehöhe LH befindlichen Ladeebene LE. Ladeoberrahmen und Fahrgestellrahmen sind vorzugsweise in der ersten Betriebsposition gegen unbeabsichtigte Längsverschiebung relativ zueinander lösbar arretiert, z. B. über eine Bolzenverriegelung.

In der in Fig. 1 skizzierten Situation befinden sich die Unterkanten der Querträger, insbesondere des hinteren Querträgers QT1 in einer Höhe HQ, welche größer ist als die Höhe HR der Scheitelpunkte/Oberkanten der Rädersätze RS und wie im Beispielsfall der die Rädersätze überdeckenden Kotflügelanordnungen KA1, KA2, KA3, insbesondere der Kotflügelanordnung KA1 über dem Rädersatz der hinteren Radachse RA1.

Das Gewicht des auf dem Ladeoberrahmen LO gehaltenen kurzen 20'-Containers I20 ist im wesentlichen durch die Räder des Fahrgestellrahmens getragen und belastet unzureichend ein Zugfahrzeug, welches über eine am frontseitigen Ende des Ladeoberrahmens befindliche Sattelkupplung verbunden ist. Die in Fig. 1 skizzierte erste Betriebsposition des Ladeoberrahmens in Längsrichtung relativ zum Fahrgestellrahmen ist deshalb für den Fahrbetrieb bei der gegebenen Beladung ungünstig.

In an sich bekannter Weise kann der Ladeoberrahmen relativ zum Fahrgestellrahmen ausgezogen werden, indem die Räder des Fahrgestellrahmens über dessen Bremsanlage blockiert werden und mittels des Zugfahrzeugs der Ladeoberrahmen in Längsrichtung verschoben wird in eine in Fig. 2 skizzierte zweite Betriebsposition des Ladeoberrahmens in Längsrichtung relativ zum Fahrgestellrahmen. Erforderlichenfalls ist eine in der ersten Betriebsposition nach Fig. 1 gegebene Arretierung zwischen Ladeoberrahmen und Fahrgestellrahmen zuvor zu lösen. Eine solche Arretierung, z. B. über einen federbelasteten Bolzen oder Haken, rückt vorteilhafterweise bei der Längsverschiebung des Ladeoberrahmens relativ zum Fahrgestellrahmen bei Erreichen der in Fig. 2 skizzierten zweiten Betriebsposition selbsttätig ein und verhindert eine weitere Verschiebung in Längsrichtung. Bei nur zwei Betriebspositionen kann die Längsverschiebung auch durch einen Endanschlag begrenzt sein.

Während der Verschiebung bleibt die Verschiebehöhe LH der Ladeebene so weit erhalten, dass die Unterkante des ersten Querträgers QT1 zuverlässig oberhalb der Kotflügelanordnung KA1 bleibt. Insbesondere kann während der Verschiebung von der ersten Betriebsposition in die zweite Betriebsposition die Höhe der Ladeebene im wesentlichen konstant auf der Verschiebehöhe LH bleiben.

In der in Fig. 2 dargestellten zweiten Betriebsposition belastet das Gewicht des Containers 120 günstigerweise auch in nennenswertem Ausmaß über die Sattelkupplung das Zugfahrzeug und verbessert damit die Fahreigenschaften gegenüber der in Fig. 1 skizzierten ersten Betriebsposition. Die Länge des Chassis ist in der zweiten Betriebsposition größer als in der ersten Betriebsposition. In der in Fig. 2 skizzierten zweiten Betriebsposition des Ladeoberrahmens in Längsrichtung relativ zum Fahrgestellrahmen befindet sich der hintere (erste) Querträger QT1 in Längsrichtung vor der Achsposition A1 der hinteren Radachse RA1, bei dem gegebenen Beispiel mit dem mehrachsigen Fahrgestellrahmen zwischen der ersten Achsposition A1 und der dieser in Längsrichtung benachbarten Achsposition A2. Vorteilhafterweise liegt die Längsposition P21 in der in Fig. 2 skizzierten zweiten Betriebsposition in einem Zwischenbereich ZB sowohl von der hinteren (ersten) als auch von der zweiten Achsposition um ein Maß DA beabstandet, welches vorzugsweise wenigstens 50 %, insbesondere wenigstens 80 % des Radhalbmessers RR der Räder beträgt. Die Längsposition P22 des zweiten Querträgers QT2 liegt in der zweiten Betriebsposition vor der Achsposition A3 der dritten, vordersten Radachse RA3.

In der zweiten Betriebsposition des Ladeoberrahmens relativ zum Fahrgestellrahmen kann der Fahrgestellrahmen mit dem Ladeoberrahmen in gegenseitig arretierter Position mittels der pneumatischen Federung des Fahrgestells abgesenkt werden auf eine in Fig. 3 skizzierte tiefere Position mit einer gegenüber LH reduzierten unteren Höhe LL der Ladeebene des Ladeoberrahmens LO. In dieser abgesenkten Position kann insbesondere die Unterkante UK1 des hinteren Querträgers QT1 auf einer Höhe LQ liegen, welche niedriger ist als die bei der Absenkung im wesentlichen unveränderte Höhe HR der Oberkante der Räder oder gegebenenfalls der Kotflügelanordnung KA1. Wesentlich an der abgesenkten Position nach Fig. 3 ist, dass ein auf die Ladeebene in der unteren Ladehöhe LL aufgesetzter Container H40 mit einer standardisierten Containerhöhe, insbesondere ein Highcube-Container, eine Gesamthöhe HH des beladenen Chassis zeigt, welche eine gesetzlich vorgegebene Höhenbegrenzung HB für den Containertransport nicht überschreitet. Die für den Fahrbetrieb abgesenkte Position nach Fig. 3 sei daher als Fahrposition und die dabei von der Ladeebene eingenommene untere Ladehöhe als Fahrhöhe angenommen. Im Gegensatz dazu sei die angehobene Position nach Fig. 1 und Fig. 2 als Verschiebeposition mit auf Verschiebehöhe liegender Ladeebene bezeichnet. Eine Verschiebung des Ladeoberrahmens zwischen der ersten und der zweiten Betriebsposition ist nur in der auf Verschiebehöhe angehobenen Position möglich.

Insbesondere kann der Container H40, welcher in Fig. 3 zusätzlich zu dem in Fig. 1 und Fig. 2 angenommenen kurzen Container I20 eingezeichnet ist, ein HC-Container mit z. B. 40' Containerlänge und mit einer Containerhöhe ZH=2896 mm sein, für dessen Transport bei einer gegebenen Höhenbegrenzung von 4000 mm die Fahrhöhe LL maximal 1104 mm beträgt. Durch gezeichnete Unterbrechung des Chassis und des Containers H40 in Fig. 3 sei angedeutet, dass die absolute Länge des Chassis für die vorliegende Erfindung nachrangig ist. Das Chassis kann frontseitig bei der Sattelkupplung einen zusätzlichen Auszug zur Längenveränderung besitzen und/oder eine Gooseneck-Struktur, welche in mittige Tunnel an der Unterseite von HC-Containern eintaucht, aufweisen. Zur Halterung längerer Container ist in an sich bekannter Art am Heck des Fahrgestellrahmens eine weitere Verriegelung HV vorgesehen, welche in Fig. 1 nach unten weggeklappt gezeichnet ist. Außerdem kann ein nach hinten verschiebbarer Heckauszug vorgesehen sein.

Das Prinzip der abgesenkten Fahrposition nach Fig. 3 ermöglicht die Einhaltung der Höhenbegrenzung beim Transport unter Beibehaltung bewährter und gebräuchlicher, die minimale Ladehöhe beim Verschiebevorgang beeinflussender Komponenten. Insbesondere kann eine vorteilhafte Höhe der Querträger und Verriegelungen von typischerweise 80-140 mm beibehalten werden. Auch hinsichtlich des Räderdurchmessers, bei welchem für die Höhe HR gegebenenfalls noch Federweg sowie Abstand und Eigenhöhe von die Räder abdekkenden Kotflügelanordnungen zu berücksichtigen sind, ermöglicht die Erfindung die Beibehaltung gebräuchlicher Reifengrößen. Kotflügelanordnungen sind gegebenenfalls nicht wie herkömmlich starr mit dem Fahrgestellrahmen verbunden sondern vertikal mit den federnd aufgehängten Rädern verbunden, insbesondere an den Radachsen befestigt. Die Fahrhöhe der Luftfederung ist vorteilhafterweise an die gegenüber herkömmlichen längenveränderbaren Chassis tiefere Lage des Fahrgestellrahmens in der Fahrposition nach Fig. 3, insbesondere hinsichtlich der Sicherstellung eines ausreichenden Federwegs im Fahrbetrieb, angepasst. Innerhalb eines vertikalen Verstellbereichs der Höhe der Ladeebene mittels der pneumatischen Federung liegt vorteilhafterweise die Verschiebehöhe im oberen Drittel und die Fahrhöhe im unteren Drittel eines solchen Verstellbereichs.

Die Ladeebene verläuft bei bei Anheben oder Absenken des Ladeoberrahmens unveränderter Höhe des Auflagers eines Zugfahrzeugs im Frontbereich des Chassis nur in einer Höhenposition, vorzugsweise der Fahrhöhe, parallel zu einer ebenen Standfläche FB und in anderer Höhenposition leicht gegen eine solche ebene Standfläche gezeigt. Die Höhenvariation tritt dann im wesentlichen im Heckbereich des Chassis in Erscheinung. Die Höhe der Ladeebene im Frontbereich des Chassis ist dann für alle Höhenpositionen des Ladeoberrahmens relativ zu den Radachsen gleich der Fahrhöhe und während des Verschiebevorgangs niedriger als die Verschiebehöhe der Ladeebene, welche im Heckbereich vorliegt.

Auch für einen Container geringerer Containerhöhe wie z. B. in Fig. 3 den Container I20 mit ISO-Standardmaß ZI=2776 mm, welcher eventuell in der angehobenen Position nach Fig. 2 noch innerhalb der Höhenbegrenzung HB liegen kann, erfolgt zum Transport vorteilhafterweise eine Absenkung der Ladeebene von der Verschiebehöhe LH auf die niedrigere Position der Fahrhöhe LL nach Fig. 3 oder eine Zwischenposition.

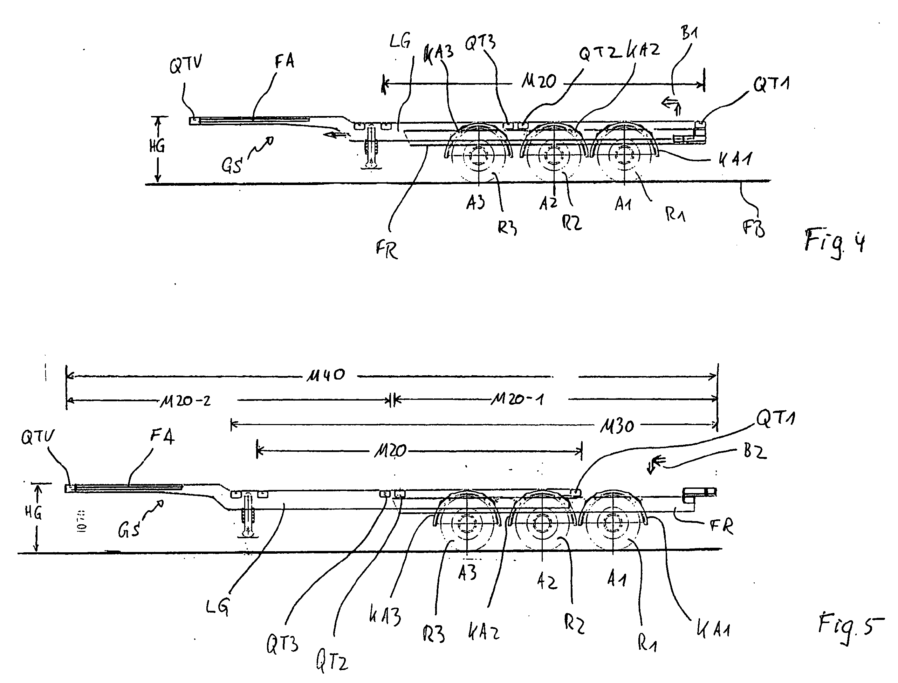

In Fig. 4 und Fig. 5 ist ein weiteres Beispiel eines Chassis skizziert, bei welchem ein Ladeoberrahmen LG frontseitig eine Gooseneck-Struktur GS zeigt. Bei diesem Beispiel sind gegen den hinteren Querträger QT1 in Längsrichtung versetzt angeordnete Querträger QT2, QT3 so in Längsrichtung positioniert, dass sie in der in Fig. 1 skizzierten ersten Betriebsposition, in welcher das Chassis ganz zusammengeschoben ist und der hintere Querträger QT1 sich am Heck des Chassis befindet, zwischen Achspositionen A2, A3 und von diesen beabstandet liegen. Damit ist auch in der eingeschobenen ersten Betriebsposition wie in Fig. 4 skizziert eine Absenkung des Ladeoberrahmens auf Fahrhöhe LL der Ladeebene möglich.

Zum Ausziehen des Chassis in die in Fig. 5 skizzierte zweite Betriebsposition wird, wie durch Pfeile B1, B2 angedeutet, der Laderahmen über die pneumatische Federung auf Verschiebehöhe LH angehoben, bei blockierten Rädern und gelöster Längsarretierung der Ladeoberrahmen gegenüber dem Fahrgestellrahmen nach vorne ausgezogen, erneut gegen unbeabsichtigtes Verschieben in Längsrichtung arretiert und wieder auf Fahrhöhe LL abgesenkt. In Fig. 5 sind die Transportpositionen in Längsrichtung für verschiedene Containertypen als Abstandsmaße eingetragen und mit M20 für einen einzelnen 20'-ISO-Container, M30 für einen 30'-ISO-Container, M20-1 und M20-2 für Beladung mit zwei 20'-ISO-Containern sowie M40 für einen 40'ISO- oder HC-Container bezeichnet. Ein 40'-ISO-Container liegt dabei gegenüber der Fahrhöhe LL der Ladeebene des Ladeoberrahmens erhöht auf der Höhe HG der Gooseneck-Struktur auf dem Chassis auf, bleibt aber mit seiner Oberkante noch unter der vorgegebenen Höhenbeschränkung. Dies gilt entsprechend auch bei Beladung des Chassis mit zwei 20'-ISO-Containern für den in Fahrtrichtung vorne liegenden Container M20-2. Ein frontseitiger Auszug FA erlaubt zusätzlich die Verlängerung des Chassis nach vorne zur Halterung von 45'-Containern. HC-Container werden frontseitig in üblicher Weise durch horizontal in Beschläge des Containers eingreifende Steckbolzen gehalten.

Wenn der einzelne 20'-Container an M20 oder der 30'-Container an M30 auch bei auf Verschiebehöhe liegender Ladeebene noch innerhalb der Höhenbeschränkung HG liegt, kann bei solcher Beladung auch mit auf Verschiebehöhe befindlicher Ladeebene gefahren werden, so dass die Längsposition des ersten Querträgers QT1 für solche Beladungssituationen unkritisch ist und von der zweiten Betriebsposition verschieden sein kann und nur bei HC-Containern und bei auf der Gooseneck-Struktur aufliegenden ISO-Containern für Fahrbetrieb eine Absenkung der Ladeebene erforderlich ist und der erste Querträger bei auf Fahrhöhe LL abgesenkter Ladeebene in Längsrichtung zwischen zwei Achspositionen liegt und zwischen benachbarte Räder R1, R2 bzw. Kotflügelanordnungen KA1, KA2 eintaucht. Entsprechendes gilt auch für das in Fig. 1 bis Fig. 3 skizzierte Chassis. Bevorzugt sind aber Ausführungsformen mit genau zwei Betriebspositionen nach Fig. 1 bzw. Fig. 4 einerseits und Fig. 3 bzw.

Fig. 5 andererseits, wobei insbesondere in der zweiten Betriebsposition nach Fig. 3 bzw. Fig. 5 der hintere Querträger QT1 in Längsrichtung beabstandet zwischen zwei Radachsen liegt und der Ladeoberrahmen für Fahrbetrieb absenkbar ist.

Für die Verschiebung des Ladeoberrahmens mit dem Container aus der ersten Betriebsposition nach Fig. 1 in die Fahrposition nach Fig. 3 können die einzelnen Vorgänge nacheinander manuell oder teilautomatisiert abgewickelt werden. Bei rein manueller Abwicklung wird beispielsweise
a) soweit nicht bereits gegeben, über eine Ventilanordnung der pneumatischen Federung des Fahrgestells der Fahrgestellrahmen und der Ladeoberrahmen mit Container auf die Verschiebehöhe LH angehoben,
b) die Bremsanlage des Fahrgestells, soweit nicht bereits gegeben, auf Rangierbetrieb mit Blockade der Räder gestellt,
c) die Arretierung, z. B. Verriegelungsbolzen zwischen Ladeoberrahmen und Fahrgestellrahmen gelöst,
d) durch kurzes Vorfahren des Zugfahrzeugs der Ladeoberrahmen so weit ausgezogen, dass der Verriegelungsbolzen von seiner Arretierungsposition der ersten Betriebsposition beabstandet ist,
e) der Verriegelungsbolzen unter Vorspannung an eine Gleitfläche des Fahrgestellrahmens oder des Ladeoberrahmens angelegt,
f) durch erneutes Vorfahren des Zugfahrzeugs der Ladeoberrahmen gegen den Fahrgestellrahmen weiter ausgezogen, bis der Verriegelungsbolzen unter der Vorspannung in die nächste Arretierungsposition entsprechend der zweiten Betriebsposition nach Fig. 2 einrastet,
g) über die Ventilanordnung der Fahrgestellrahmen mit Ladeoberrahmen und Container in die tiefere Fahrposition mit der Ladeebene auf Fahrhöhe nach Fig. 3 abgesenkt,
h) die Bremsanlage auf Fahrbetrieb umgestellt,
i) der Transport gestartet.

Die manuelle Vorgehensweise kann insbesondere durch den mehrfachen Wechsel zwischen Anhänger und Zugfahrzeug als umständlich und zeitraubend empfunden werden, so dass gemäß einer vorteilhaften Weiterentwicklung mehrere oder vorzugsweise alle der herkömmlicherweise durch handbetätigte Bedienelemente am Chassis ausgelösten vorgenannten Vorgänge leitungsgebunden oder drahtlos ferngesteuert vom Zugfahrzeug aus veranlasst werden können, wofür dann vorteilhafterweise am Chassis entsprechende Sensoren z. B. für die Längsverschiebung und/oder die Höhenverstellung und/oder die Arretierung und/oder die Bremsanlage und im Zugfahrzeug entsprechende Anzeige- oder Meldeeinrichtungen vorgesehen sind. Gemäß einer bevorzugten Ausführungsform kann eine Steuereinrichtung eine Folge von ansonsten manuell ausgelösten Vorgängen automatisch abwickeln und dabei jeweils den Vollzug vorangegangener Schritte überwachen. Insbesondere kann vorteilhafterweise vorgesehen sein, dass der Fahrer ausgehend von der ersten Betriebsposition über entsprechende Bedieneinrichtungen pauschal einen Verschiebevorgang von der ersten Betriebsposition nach Fig. 1 in die abgesenkte Fahrposition nach Fig. 3 startet und daraufhin die Steuereinrichtung nacheinander die Schritte
A1) soweit sich die Ladeebene nicht bereits auf Verschiebehöhe befindet, Anhebung von Fahrgestellrahmen und Laderahmen mittels der pneumatischen Federung,
A2) überwachen der Höhe des Fahrgestellrahmens oder Ladeoberrahmens, bzw. der Ladeebene,
A3) bei auf Verschiebehöhe befindlicher Ladeebene Beenden des Anhebens,
A4) überprüfen der Blockierung der Räder und erforderlichenfalls Betätigen der Bremsanlage,
A5) Lösen der Verriegelung zwischen Ladeoberrahmen und Fahrgestellrahmen,
A6) Ausziehsignal an den Fahrer
durchführt.

Der Fahrer zieht durch Vorfahren des Zugfahrzeugs den Ladeoberrahmen gegenüber dem Fahrgestellrahmen aus bis in die zweite Betriebsposition. Vorteilhafterweise nimmt die Verriegelungseinrichtung nach Beginn des Ausziehvorgangs eine in dem Sinne vorgespannte Stellung ein, dass sie bei Erreichen der zweiten Betriebsposition automatisch Ladeoberrahmen und Fahrgestellrahmen wieder gegen Längsverschiebung verriegelt. Bei vorzugsweise genau zwei unterschiedlichen Betriebspositionen kann der Ausziehvorgang durch einen Anschlag begrenzt sein. Das Erreichen der zweiten Betriebsposition mit Sperren eines weiteren Ausziehens erkennt der Fahrer im Prinzip am Verhalten des Zugfahrzeugs, die Steuereinrichtung kann aber auch en Signal hierzu erzeugen, insbesondere optisch oder akustisch. Alternativ oder zusätzlich kann die Steuereinrichtung in der zweiten Betriebsposition eine Schriftfolge mit
B1) Überprüfen der Verriegelung und eventuell zusätzliches Sichern gegen Entriegeln,
B2) Absenken von Fahrgestellrahmen und Ladeoberrahmen mittels der pneumatischen Federung,
B3) Überwachen der Höhe des Fahrgestellrahmens oder Laderahmens,
B4) bei auf Fahrhöhe befindlicher Ladeebene Beenden des Absenkens,
B5) Aufheben der Blockierung der Räder,
B6) Fahrfreigabesignal an den Fahrer
durchführen. In entsprechender Weise können die Schrittfolgen A und B für die Verschiebung von der zweiten in die erste Betriebsposition durch die Steuereinrichtung in umgekehrter Reihenfolge automatisch abgewickelt werden, wobei offensichtlich Modifikationen wie Ersatz der Eingabe eines Startbefehls durch Ausgabe eines abschließenden Signals und umgekehrt selbstverständlich sind. Einzelne der aufeinanderfolgenden Schritte können auch vertauscht sein oder durch den Fahrer des Zugfahrzeugs, vorzugsweise fernbedient, ausgelöst werden.

Die Steuereinrichtung kann Bauelemente einschließlich Sensoren und Aktuatoren in elektrischer/elektronischer und/oder mechanischer und/oder pneumatischer Bauform umfassen. Die Bauelemente als solche sind bekannt und dem Fachmann geläufig. Vorteilhafterweise können einzelne Schritte durch Sensoren auf erfolgreichen Abschluss überwacht werden. Für einzelne abgeschlossene Schritte können jeweils Meldesignale erzeugt werden.

Die vorstehend und die in den Ansprüchen angegebenen sowie die den Abbildungen entnehmbaren Merkmale sind sowohl einzeln als auch in verschiedener Kombination vorteilhaft realisierbar. Die Erfindung ist nicht auf die beschriebenen Ausführungsbeispiele beschränkt, sondern im Rahmen fachmännischen Könnens in mancherlei Weise abwandelbar.

## Patentansprüche

1. Längenverstellbares Containerchassis mit einem Fahrgestellrahmen und einem relativ zu diesem in Längsrichtung zwischen wenigstens zwei Betriebspositionen verschiebbaren Ladeoberrahmen, wobei
- der Fahrgestellrahmen (FR) wenigstens einen hinteren Rädersatz auf einer hinteren Radachse (RA1) an einer hinteren Achsposition (A1) aufweist,
- der Ladeoberrahmen (LO) in einem hinteren Bereich einen hinteren Querträger (QT1) aufweist,
- in einer ersten Betriebsposition des Ladeoberrahmens mit geringer Chassislänge der hintere Querträger (QT1) in Längsrichtung hinter der hinteren Achsposition (A1) liegt (P11),
- in einer zweiten Betriebsposition des Ladeoberrahmens mit größerer Chassislänge der hintere Querträger (QT1) in Längsrichtung vor der hinteren Achsposition (a1) liegt (P21)
**dadurch gekennzeichnet, dass**
- der Ladeoberrahmen in der zweiten Betriebsposition zwischen einer Fahrhöhe (LL) und einer Verschiebehöhe (LH) einer Ladeebene höhenverstellbar ist,
- eine Verschiebung des Ladeoberrahmens zwischen der ersten und der zweiten Betriebsposition nur in Verschiebehöhe (LH) möglich ist.

2. Containerchassis nach Anspruch 1, **dadurch gekennzeichnet, dass** der Fahrgestellrahmen mehrere in Längsrichtung versetzte Radachsen aufweist und dass der hintere Querträger (QT1) in der zweiten Betriebsposition in Längsrichtung zwischen zwei Achspositionen (A1, A2) liegt (P21).

3. Containerchassis nach Anspruch 1 oder 2, **dadurch gekennzeichnet, dass** der hintere Querträger (QT1) in der zweiten Betriebsposition um wenigstens 50 %, insbesondere wenigstens 80 % eines Radhalbmessers (RR) in Längsrichtung von Achspositionen (A1, A2) des Fahrgestellrahmens beabstandet (DA) ist.

4. Containerchassis nach einem der Ansprüche 1 bis 3, **dadurch gekennzeichnet, dass** die Differenz zwischen Fahrhöhe (LL) und Verschiebehöhe (LH) wenigstens 80 mm, insbesondere wenigstens 120 mm beträgt.

5. Containerchassis nach einem der Ansprüche 1 bis 4, **dadurch gekennzeichnet, dass** die Fahrhöhe (LL) der Ladeebene des Ladeoberrahmens maximal 1150 mm, insbesondere maximal 1104 mm beträgt.

6. Containerchassis nach einem der Ansprüche 1 bis 5, **dadurch gekennzeichnet, dass** die Räder auf der hinteren Radachse (RA1) mit Kotflügelanordnungen (KA1) überdeckt sind und bei in Fahrhöhe befindlichem Fahrgestellrahmen die Unterkante des hinteren Querträgers tiefer (HQ) liegt als die Oberkante (HR) der Kotflügelanordnungen (KA1).

7. Containerchassis nach einem der Ansprüche 1 bis 6, **dadurch gekennzeichnet, dass** die Höhenverstellung des Ladeoberrahmens über pneumatische Elemente der Fahrgestell-Luftfederung erfolgt.

8. Containerchassis nach einem der Ansprüche 1 bis 7, **dadurch gekennzeichnet, dass** Ladeoberrahmen (LO) und Fahrgestellrahmen (FR) in ihrer relativen Höhenlage unveränderbar sind und die Höhenverstellung des Ladeoberrahmens durch Höhenverstellung des Fahrgestellrahmens relativ zu dem hinteren Rädersatz erfolgt.

9. Containerchassis nach einem der Ansprüche 1 bis 8, **dadurch gekennzeichnet, dass** der Ladeoberrahmen (LO) an seinem vorderen Ende eine Gooseneck-Struktur (GS) aufweist.

10. Containerchassis nach einem der Ansprüche 1 bis 9, **dadurch gekennzeichnet, dass** eine Steuereinrichtung die Verschiebung des Ladeoberrahmens und die Höhenverstellung des Fahrgestellrahmens koordiniert.

11. Containerchassis nach Anspruch 10, **dadurch gekennzeichnet, dass** die Steuereinrichtung im Eingabemittel für ein Startsignal einer Verschiebung des Ladeoberrahmens enthält und auf ein Startsignal hin
a) eine Blockierung der Bremsen des Fahrgestells überprüft und erforderlichenfalls veranlasst,
b) eine Anhebung des Fahrgestellrahmens von Fahrhöhe auf Verschiebe höhe überprüft und erforderlichenfalls veranlasst,
c) nach Erreichen der Verschiebehöhe bei blockierten Bremsen eine Arretierung zwischen Fahrgestellrahmen und Ladeoberrahmen löst,
d) ein Freigabesignal an den Fahrer eines Zugfahrzeugs abgibt.

12. Containerchassis nach Anspruch 10 oder 11, **dadurch gekennzeichnet, dass** die Steuereinrichtung eine Arretierung von Fahrgestellrahmen und Ladeoberrahmen bei Erreichen der nächsten Betriebsposition überwacht und bei Erreichen der zweiten Betriebsposition eine Absenkung des Fahrgestellrahmens auf Fahrhöhe bewirkt und ein Abschlusssignal an den Fahrer eines Zugfahrzeugs abgibt.

## Claims

1. Length-adjustable container chassis having a chassis frame and an upper loading frame which can be displaced longitudinally relative to this chassis frame between at least two operating positions, it being the case that
- the chassis frame (FR) has at least one rear set of wheels on a rear wheel axle (RA1) at a rear axial position (A1),
- the upper loading frame (LO) has, in a rear region, a rear crossmember (QT1),
- in a first operating position of the upper loading frame, with a short chassis length, the rear crossmember (QT1) is located behind the rear axial position (A1), as seen in the longitudinal direction (P11),
- in a second operating position of the upper loading frame, with a longer chassis length, the rear crossmember (QT1) is located in front of the rear axial position (A1), as seen in the longitudinal direction (P21),
**characterized in that**
- the upper loading frame, in the second operating position, can be vertically adjusted between a travelling height (LL) and a displacement height (LH) of a loading plane,
- displacement of the upper loading frame between the first and the second operating positions is possible only at the displacement height (LH).

2. Container chassis according to Claim 1, **characterized in that** the chassis frame has a plurality of longitudinally offset wheel axles, and **in that** the rear crossmember (QT1), in the second operating position, is located between two axial positions (A1, A2), as seen in the longitudinal direction (P21).

3. Container chassis according to Claim 1 or 2, **characterized in that** the rear crossmember (QT1), in the second operating position, is spaced apart (DA) from axial positions (A1, A2) of the chassis frame by at least 50%, in particular at least 80%, of a wheel radius (RR), as seen in the longitudinal direction.

4. Container chassis according to one of Claims 1 to 3, **characterized in that** the difference between the travelling height (LL) and displacement height (LH) is at least 80 mm, in particular at least 120 mm.

5. Container chassis according to one of Claims 1 to 4, **characterized in that** the travelling height (LL) of the loading plane of the upper loading frame is not more than 1150 mm, in particular not more than 1104 mm.

6. Container chassis according to one of Claims 1 to 5, **characterized in that** the wheels on the rear wheel axle (RA1) are covered over by mudguard arrangements (KA1) and, with the chassis frame at the travelling height, the bottom edge of the rear crossmember is located at a lower level (HQ) than the top edge (HR) of the mudguard arrangements (KA1).

7. Container chassis according to one of Claims 1 to 6, **characterized in that** the vertical adjustment of the upper loading frame takes place via pneumatic elements of the pneumatic chassis suspension.

8. Container chassis according to one of Claims 1 to 7, **characterized in that** it is not possible to alter the relative vertical position of the upper loading frame (LO) and chassis frame (FR), and the vertical adjustment of the upper loading frame takes place by virtue of the chassis frame being vertically adjusted relative to the rear set of wheels.

9. Container chassis according to one of Claims 1 to 8, **characterized in that** the upper loading frame (LO) has a gooseneck structure (GS) at its front end.

10. Container chassis according to one of Claims 1 to 9, **characterized in that** a control arrangement coordinates the displacement of the upper loading frame and the vertical adjustment of the chassis frame.

11. Container chassis according to Claim 10, **characterized in that** the control arrangement contains an input means for a start signal for displacement of the upper loading frame and, if a start signal is given,
a) checks and, if necessary, provides for a blocking action of the brakes of the chassis,
b) checks and, if necessary, provides for raising of the chassis frame from the travelling height to the displacement height,
c) once the displacement height has been reached, with the brakes blocked, releases an arresting action between the chassis frame and upper loading frame,
d) emits a release signal to the driver of a towing vehicle.

12. Container chassis according to Claim 10 or 11, **characterized in that** the control arrangement monitors an arresting action between the chassis frame and upper loading frame when the next operating position is reached and, when the second operating position is reached, causes the chassis frame to be lowered to the travelling height and emits a termination signal to the driver of a towing vehicle.

## Revendications

1. Châssis pour conteneurs, réglable en longueur, comportant un cadre de châssis et un cadre supérieur de chargement coulissant par rapport à celui-ci en direction longitudinale entre au moins deux positions de fonctionnement, dans lequel
- le cadre de châssis (FR) comprend au moins un jeu de roues arrière sur un essieu arrière (RA1) à une position d'essieu arrière (A1),
- le cadre supérieur de chargement (LO) comprend une traverse arrière (QT1) dans une région arrière,
- dans une première position de fonctionnement du cadre supérieur de chargement avec la petite longueur de châssis, la traverse arrière (QT1) se trouve en direction longitudinale derrière la position d'essieu arrière (A1), en (P11),
- dans une deuxième position de fonctionnement du cadre supérieur de chargement avec une plus grande longueur de châssis, la traverse arrière (QT1) se trouve en direction longitudinale devant la position d'essieu arrière (A1), en (P21),
**caractérisé en ce que**
- dans la deuxième position de fonctionnement, le cadre supérieur de chargement est réglable en hauteur entre une hauteur de circulation (LL) et une hauteur de coulissement (LH) d'un plan de chargement,
- un coulissement du cadre supérieur de chargement entre la première et la deuxième position de fonctionnement n'est possible qu'à la hauteur de coulissement (LH).

2. Châssis pour conteneurs selon la revendication 1, **caractérisé en ce que** le cadre de châssis comprend plusieurs essieux décalés en direction longitudinale et **en ce que**, dans la deuxième position de fonctionnement, la traverse arrière (QT1) se trouve en direction longitudinale entre deux positions d'essieu (A1, A2), en (P21).

3. Châssis pour conteneurs selon la revendication 1 ou 2, **caractérisé en ce que**, dans la deuxième position de fonctionnement, la traverse arrière (QT1) est espacée d'au moins 50 %, en particulier d'au moins 80 % d'un demi-diamètre de roue (RR), en direction longitudinale de positions d'essieu (A1, A2) du cadre de châssis, en (DA).

4. Châssis pour conteneurs selon l'une quelconque des revendications 1 à 3, **caractérisé en ce que** la différence entre la hauteur de circulation (LL) et la hauteur de coulissement (LH) vaut au moins 80' mm, en particulier au moins 120 mm.

5. Châssis pour conteneurs selon l'une quelconque des revendications 1 à 4, **caractérisé en ce que** la hauteur de circulation (LL) du plan de chargement du cadre supérieur de chargement vaut au maximum 1150 mm, en particulier au maximum 1104 mm.

6. Châssis pour conteneurs selon l'une quelconque des revendications 1 à 5, **caractérisé en ce que** les roues de l'essieu arrière (RA1) sont couvertes par des dispositifs de garde-boue (KA1) et, lorsque le cadre de châssis se trouve à la hauteur de circulation, l'arête inférieure de la traverse arrière est située plus bas (HQ) que l'arête supérieure (HR) des dispositifs de garde-boue (KA1).

7. Châssis pour conteneurs selon l'une quelconque des revendications 1 à 6, **caractérisé en ce que** le réglage en hauteur du cadre supérieur de chargement est effectué par l'intermédiaire d'éléments pneumatiques de la suspension pneumatique du châssis.

8. Châssis pour conteneurs selon l'une quelconque des revendications 1 à 7, **caractérisé en ce que** le cadre supérieur de chargement (LO) et le cadre de châssis (FR) ont une position relative en hauteur inchangeable et le réglage en hauteur du cadre supérieur de chargement est effectué par un réglage en hauteur du cadre de châssis par rapport au jeu de roues arrière.

9. Châssis pour conteneurs selon l'une quelconque des revendications 1 à 8, **caractérisé en ce que** le cadre supérieur de chargement (LO) comporte une structure en col de cygne (GS) à son extrémité avant.

10. Châssis pour conteneurs selon l'une quelconque des revendications 1 à 9, **caractérisé en ce qu'**un dispositif de commande coordonne le coulissement du cadre supérieur de chargement et le réglage en hauteur du cadre de châssis.

11. Châssis pour conteneurs selon la revendication 10, **caractérisé en ce que** le dispositif de commande comprend un moyen d'entrée pour un signal de démarrage d'un coulissement du cadre supérieur de chargement et, suite à un signal de démarrage:
a) contrôle et si nécessaire commande un blocage des freins du châssis;
b) contrôle et si nécessaire provoque un levage du cadre de châssis de la hauteur de circulation à la hauteur de coulissement;
c) après avoir atteint la hauteur de coulissement avec les freins bloqués, desserre le blocage entre le cadre de châssis et le cadre supérieur de chargement;
d) émet un signal de libération pour le conducteur d'un véhicule de traction.

12. Châssis pour conteneurs selon la revendication 10 ou 11, **caractérisé en ce que** le dispositif de commande surveille un blocage du cadre de châssis et du cadre supérieur de chargement lorsque l'on atteint la position de fonctionnement suivante, et provoque une descente du cadre de châssis à la hauteur de circulation lorsque l'on atteint la deuxième position de fonctionnement, et émet un signal de fin pour le conducteur d'un véhicule de traction.
